Europäisches Patentamt

European Patent Office

Office européen des brevets

(11) Veröffentlichungsnummer: **0 300 395**
**A2**

(12) **EUROPÄISCHE PATENTANMELDUNG**

(21) Anmeldenummer: 88111478.9

(22) Anmeldetag: 16.07.88

(51) Int. Cl.⁴ **H04B 1/08 , G11B 31/00 , H02G 11/02**

(30) Priorität: 22.07.87 DE 3724208

(43) Veröffentlichungstag der Anmeldung:
25.01.89 Patentblatt 89/04

(84) Benannte Vertragsstaaten:
AT BE CH DE ES FR GB GR IT LI LU NL SE

(71) Anmelder: **Pavel, Andreas**
**Via Vincenco Monti 92**
**I-20145 Milano(IT)**

(72) Erfinder: **Pavel, Andreas**
**Via Vincenco Monti 92**
**I-20145 Milano(IT)**

(74) Vertreter: **Otte, Peter, Dipl.-Ing.**
**Tiroler Strasse 15**
**D-7250 Leonberg(DE)**

(54) Vorrichtung zur Lagerung eines elektrischen Verbindungskabels.

(57) Bei einer Vorrichtung zur Lagerung des elektrischen Verbindungskabels, welches zwischen eine tragbare, batteriebetriebene Programmquelle, die ein Kleinstereogerät, ein Kassettenspieler und/oder ein Rundfunkempfänger sein kann und üblicherweise ein sogenannter Walkman in allen seinen Ausgestaltungen ist, und den an dieses Programmgerät angeschossenen Kopf-oder Ohrhörern geschaltet ist, wird vorgeschlagen, eine separate, dieses Verbindungskabel mittels einer Aufwickelanordnung mindestens teilweise aufnehmende Kassette mit eigener, abgeschlossener Gehäuseform vorzusehen und diese Kassette über mechanische Verriegelungsmittel und/oder elektrische Verbindungsmittel, die gleichzeitig auch die mechanischen Verriegelungsmittel bilden können, an das Gehäuse des Programmgeräts anzustecken, vorzugsweise anzurasten. Dabei ist die Aufwickelanordnung bevorzugt so ausgebildet, daß sie das Kabel automatisch einzieht, jedoch durch eine mechanische Fixierung in beliebiger Auszugslänge spannungsfrei halten kann.

Fig.1

**Vorrichtung zur Lagerung eines elektrischen Verbindungskabels**

Stand der Technik

Die Erfindung betrifft eine Vorrichtung zur Lagerung eines elektrischen Verbindungskabels zwischen einem Programmgerät (Kleinstereogerät) und an dieses angeschlossenen Kopf-oder Ohrhörern, nach der Gattung des Anspruchs 1.

Obwohl tragbare, batteriegetriebene Kleinstereogeräte, von denen bestimmte volkstümlich auch also sog. "Walkman" bezeichnet werden, und aus einem Kassetengerät und/oder Rundfunkempfänger bestehen können, weltweit engeführt sind und eine begeisterte Aufnahme erfahren haben, konnte ein Problem bei der Wiedergage der aufgezeichneten oder von Rundfunksendern ausgestrahlten Programmen bisher nicht gelöst werden, nämlich die sehr häufig umständ liche Manipulation, die erforderlich ist, um das Kopf- oder Ohrhörerpaar an das Kleinstereogerät über ein Verbindungskabel anschließen zu können.

Die gängige Lösung ist hier, die Kopf- oder Ohrhörer - meistens sind Ohrhörer verwendet, die als Knopfhörer direkt in das Ohr eingesteckt werden - untrennbar an das elektrische Verbindungskabel anzuschließen und dessen anderes Ende dann in eine für die stereophone Wiedergabe geeignete Anschlußbuchse am Gehäuse des Kleinstereogeräts einzustecken. Ein solches "Kopfhörerkabel" verheddert sich aber normalerweise, da es wegen seiner doch zum Teil beträchtlichen Länge im Nichtgebrauch zusammengelegt werden muß, so daß dann beim Auseinandernehmen Schlingen ineinanderfallen können und beispielsweise auch bei einem untrennbaren Anschluß an ein Kopfhörerpaar, welches über einen über den Kopf laufenden Bügel miteinander verbunden ist, noch Schlingen mit den beiden Teilkabeln bilden kann, die dann von dem einen gemeinsamen Kabel zu den beiden Einzelkopfhören führen.

Bei dieser häufigsten Ausbildungsform erfordert also die Benutzung eines Walkmans vorab die sorgfältige Aufbereitung des Verbindungskabels. Dies ist umständlich, wenn das mit dem Kleinstereogerät und den Kopfhörern bei Nichtgebrauch beispielsweise in einer Tragetasche und gegebenenfalls auch mit anderen Dingen aufbewahrte Kabel verwendet werden soll.

Dies wird besonders kompliziert, wenn, was nicht selten der Fall ist, zwei Kopfhörer- oder Ohrhörerpaare Verwendung finden, so daß zwei Personen gleichzeitig dem vom Walkman angebotenen Programm lauschen können. Problematisch ist bei diesen bekannten Anschlußmöglichkeiten ferner, daß das Verbindungskabel nur selten oder nur zufällig die richtige Länge aufweist, denn befestigt man das tragbare Kleinstereogerät am Gürtel oder steckt es in eine Tasche, dann ist das Verbindungskabel üblicherweise zu lang und bildet eine Schleife, in der man sich auch beim Umhergehen oder auch schnellen Laufen verheddern kann oder das Kabel ist zu kurz, beispielsweise wenn man sich in größerer Entfernung zum Gerät aufhält oder als kabelgebundener Mithörer bzw. Mitläufer bei einem laufenden Walkmanträger auftritt. In diesem Fall muß das Kabel noch länger als üblich und am besten verstellbar sein.

In diesem Zusammenhang ist es zwar bekannt, die drei Teile Kleinstereogerät, Verbindungskabel und Kopf- oder Ohrhörerpaar voneinander zu trennen, und zwar dadurch, daß das Verbindungskabel an beiden Enden jeweils über Steckanschlüsse oder sonstige Kontaktmittel mit dem Kleinstereogerät und dem Kopfhörer verbunden werden kann. Aber auch dies hat Nachteile, denn dann muß man das freie Verbindungskabel ebenfalls aufrollen und die Probleme sind auch nicht wesentlich geringer als weiter vorn dargestellt.

Schließlich ist kürzlich die Möglichkeit bekannt geworden (s. Prospekt von Sony "Sommersound" 87, herausgegeben von der Sony (Schweiz) AG, Rütistr. 12, 8952 Schlieren, auf S. 2, WM-51), einen Walkman mit eingebauten Kopfhörern zu verwenden. In diesem Fall verfügt das Walkman-Gehäuse selbst über eine Aufrollvorrichtung, üblicherweise auf der der Kassettenseite gegenüber liegenden Hauptfläche. Es ist ein von außen bedienbares Wickelrad vorgesehen, welches sich nahezu über die gesamte Fläche des Walkman-Gehäuses erstreckt und peripher eine Absenkung aufweist, in welche ein Finger eingreifen kann, so daß man von außen das Wickelrad, welches innen über eine Wickelspule verfügt, betätigen und damit die Spule in der einen oder anderen Richtung verdrehen kann. Die beiden hier vorgesehenen Ohrhörer sind fest mit dem aus dem Walkman-Gehäuse herausziehbaren Verbindungskabel verbunden und gelangen bei vollständigem, manuellem Aufwickeln in zwei separate Aufnahmetaschen am Walkman-Gehäuse bzw. werden in diese eingesteckt, so daß die Aufrollvorrichtung mit eingebauten Ohrhörern nicht allzu stark aufträgt. Eine Verdickung des Walkman-Gehäuses läßt sich so jedoch nicht vermeiden, wobei ferner noch problematisch sein kann, daß bei irgendwelchen hier auftretenden Beschädigungen, beispielsweise Kabelbruch, aber auch nur bei einem Verhaken oder einem Übereinanderfallen der Schlingen, so daß die Ohrhörer nicht mehr herausgezogen werden können, das gesamte Gerät zur Reparatur gegeben werden muß, eben weil der Einziehmechanismus mit den an das Verbindungskabel fest angeschlossenen Ohrhörern integraler Bestandteil des Walkman-Gehäuses ist.

Der Erfindung liegt daher die Aufgabe zugrunde, eine Möglichkeit zu schaffen, die Lagerung des elektrischen Verbindungskabels zwischen dem Kleinstereogerät und den Kopf- oder Ohrhörern so zu gestalten, daß eine ordnungsgemäße, verhedderungsfreie Aufbewahrung im Nichtgebrauch möglich ist, andererseits aber tiefgreifende bauliche Änderungen am Gehäuse des Kleinstereogeräts nicht erforderlich sind.

Vorteile der Erfindung

Die Erfindung löst diese Aufgabe mit den kennzeichnenden Merkmalen des Anspruchs 1 und hat den Vorteil, daß das kleine Stereogerät bzw. genauer dessen Gehäuse nicht mit Problemen der Kabelführung und -lagerung zu den Kopf- oder Ohrhörern belastet zu werden braucht, also optimal auch mit geringsten Abmessungen seinem eigentlichen Zweck angepaßt werden kann, andererseits aber das Verbindungskabel dennoch sauber aufgerollt in einem separaten eigenen Aufbewahrungsgehäuse, nämlich in einem im folgenden als Kabelkassette bezeichneten Teil untergebracht ist.

Dabei läßt sich die Kabelkassette durch ihre speziellen Abmessungen, die dann in vorteilhafter Weise den Abmessungen des Gehäuses angepaßt sind, problemlos mit diesem verbinden, vorzugsweise durch einen einfachen Verrastungs- oder Verriegelungsvorgang, durch welchen gleichzeitig auch die elektrischen Anschlüsse hergestellt werden.

Nach dem Anklicken der Kabelkassette an das Gehäuse des Stereogeräts oder auch schon vorher wird das in der Kabelkassette aufgerollte Kabel auf die gewünschte Länge ausgezogen und in Benutzung genommen, entweder indem untrennbar mit dem Kabel verbundene Ohreinsteckhörer (Knopfhörer) benutzt werden oder das Ende des frei ausgezogenen Kabels über Kontaktverbindungen mit getrennt gehaltenen Ohrhörern oder Kopfhörern verbunden wird. Diese Kontaktverbindungen sind dann üblicherweise Stecker, die in entsprechende, komplementär ausgebildete Buchsen unter Rastwirkung eingeführt werden.

Dabei ist ferner von Vorteil, daß durch die Möglichkeiten des Aufrollens des Kabels in einer separaten Kassette auch wesentlich größere Kabellängen zur Verfügung gestellt werden können, als normalerweise beim Tragen des Walkmans direkt am Körper erforderlich sind. Im letzteren Fall braucht daher das Kabel nur auf die gewünschte Länge ausgezogen zu werden, während im weiter vorn schon erwähnten Fall beispielsweise des Mitlaufens als kabelgebundener Mithörer eine wesentlich größere Kabellänge ausgezogen und daher vorher auch gespeichert werden kann, als dies für den normalen, bisherigen Gebrauch eines Verbindungskabels zwischen dem Kleinstereogerät und den Kopf- oder Ohrhörern zumutbar gewesen ist, wegen der mit größerer Länge stark ansteigenden Verhedderungs- oder Verwicklungsgefahr.

Vorteilhaft ist ferner, daß durch die Erfindung die Möglichkeit eröffnet wird, an das frei aus der Kassette ausziehbare Kabelende beliebige Kopf- oder Ohrhörerformen anschließen zu können, so daß zu einem späteren Zeitpunkt unter Umständen auch auf andere, hochwertigere, beispielsweise später entwickelte Kopf- oder Ohrhörerarten zurückgegriffen werden kann, ohne daß das ganze Gerät unbrauchbar wird oder jedenfalls zur Umrüstung weggegeben werden muß.

Eine weitere vorteilhafte Ausgestaltung vorliegender Erfindung besteht darin, daß das Aufwickeln des Kabels automatisch erfolgt, indem in der Kassette angeordnete Wickelrollen vorzugsweise federangetrieben ausgebildet sind und daher bei Freigabe das Kabel ordentlich und stets unter gewünschter Spannung einziehen. Daher wird auch ein Übereinanderfallen von später aufgebrachten Windungen sicher verhindert, wie dies gegebenenfalls auftreten kann, wenn man Kabel manuell aufwickelt, da dann sehr häufig mit unterschiedlichen Wickelkräften gearbeitet wird, so daß manche Schlingen locker und manche Schlingen fest liegen, die dann in vorherige Lagen einschneiden können.

Es versteht sich, daß der automatische Kabeleinzug an jeder beliebigen Stelle entweder durch Eingriff von außen (Knopfdruck) arretierbar bzw. lösbar ist oder daß ein völlig automatischer Kabelaufwickelmechanismus vorgesehen sein kann, der auf bestimmte Zugeinwirkungen oder Manipulationen am Verbindungskabel reagiert und dieses dann an der gewünschten Stelle durch internen Eingriff fixiert. Solche Feststellmechanismen bei Wickelrollen sind für sich gesehen bekannt, beispielsweise bei bestimmten Arten von Rollos für Fenster u. dgl. und können durch erneute Zugeinwirkung aus der Fixierposition in die Aufwickelposition überführt werden.

Die Befestigung der mindestens einen vorgesehenen Kabelkassette am zugeordneten Gehäuse des Kleinstereogeräts erfolgt in vorteilhafter Ausgestaltung über geeignete Verrastungsmittel von grundsätzlich beliebiger Ausbildung, wie sie für sich gesehen auch bekannt sind. Diese Verrastungsmittel können, da häufigere Anrastungen und Trennungen nicht ausgeschlossen sind, mechanisch entweder entsprechend stabil ausgebildet sein oder federnde Mittel aufweisen, die bestimmte Fixteile jeweils am anderen Teil umgreifen und diese nur bei Überwinden einer vorgegebenen Trennsperrenkraft wieder freigeben.

Durch das Anrasten oder Aufstecken der Kabelkassette auf das Gehäuse des Kleinstereogeräts erfolgt gleichzeitig auch die Herstellung der elektrischen Verbindungen, mindestens also über drei unterschiedliche Kontaktpaarungen, gegebenenfalls auch vier Kontaktpaarungen, wenn die Endstufe des Stereogeräts so ausgelegt ist, daß auf den beiden Leitungen zu jeweils einem der elektroakustischen Wandler (Kopfhörer oder Ohrhörer) gegenphasig gearbeitet wird.

Eine vorteilhafte Ausgestaltung vorliegender Erfindung besteht ferner darin, daß die an das Gehäuse des Kleinstereogeräts anzurastende Kabelkassette so ausgebildet ist, daß Mehrfachanrastungen weiterer Kassetten möglich sind, jeweils gleichzeitig mit Herstellung entsprechender mechanischer Verriegelungspositionen und elektrischer Anschlußverbindungen, so daß wie bisher von einem Stereogerät auch zwei oder mehr Personen, die jeweils über eigene Ohr-oder Kopfhörer verfügen, versorgt werden können, wenn man es nicht vorzieht, in einer Kassette zwei Wickeleinrichtungen für zwei Kabel unterzubringen, die sich unabhängig voneinander jeweils auf gewünschte Längen ausziehen lassen. Dabei können dann in den jeweiligen Kassetten unterschiedliche Kabellängen verfügbar sein, für den "Walkman"-Träger bzw. den Mitläufer.

Dies sind alternative Ausgestaltungen vorliegender Erfindung.

Durch die in den Unteransprüchen aufgeführten Maßnahmen sind vorteilhafte Weiterbildungen und Verbesserungen der im Hauptanspruch angegebenen Vorrichtung möglich.

Zeichnung

Ausführungsbeispiele der Erfindung sind in der Zeichnung dargestellt und werden in der nachfolgenden Beschreibung näher erläutert. Es zeigen:

Fig. 1 in einer perspektivischen Darstellung schematisiert die mögliche Gehäuseform eines Kleinstereogeräts mit zugeordneten, an dieses anbringbaren, nämlich anrastbaren oder ansteckbaren Kabelkassetten, die auch untereinander Verbindungsmittel aufweisen und

Fig. 2 in verkleinerter Draufsicht ein Kleinstereogerät mit zwei an dieses angerasteten Kabelkassetten.

Beschreibung der Ausführungsbeispiele

Der Grundgedanke vorliegender Erfindung besteht darin, in einem separaten Gehäuse, welches in seiner Form vorzugsweise einer der Außenflächen des Gehäuses des Kleinstereogeräts entspricht, eine Aufwickeleinrichtung für das Verbindungskabel zwischen dem Kleinstereogerät einerseits und den an dieses anzuschließenden Kopf- oder Ohrhörern andererseits anzuordnen, so daß das Verbindungskabel stets ordentlich aufgeräumt in einer eigenen Kleinkassette angeordnet ist und bei Bedarf das in dieser aufgewickelte Kabel auf die gewünschte Länge ausgezogen werden kann. Vorzugsweise arbeitet die Aufwickeleinrichtung automatisch und zieht daher bei Freigabe durch den Benutzer das Kabel von selbst wieder ein.

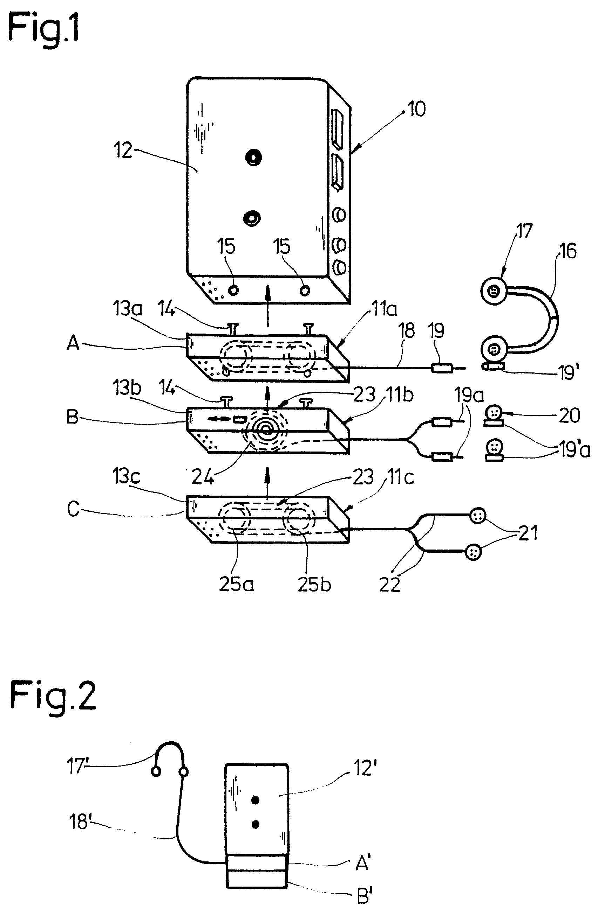

In Fig. 1 ist das Kleinstereogerät, nämlich das Gehäuse eines Walkmans allgemein mit 10 bezeichnet; auf den weiteren Aufbau und dessen Ausgestaltung braucht hier nicht genauer eingegangen zu werden, da Gegenstand der Erfindung die bei 11a, 11b und 11c dargestellte Kabelkassette ist, die in ergänzender Verbindung mit der zugehörigen Außenwandung des Gehäuses 12 des Kleinstereogeräts über geeignete Verrastungsmittel oder sonstige Verbindungsmittel verfügt, die die Kabelkassette 11a, 11b, 11c fest, jedoch lösbar mit dem Gehäuse 12 des Kleinstereogeräts verbinden und ferner auch Verbindungen von Kabelkassetten untereinander ermöglichen.

Gleichzeitig mit diesen Anrastungen der jeweiligen Kabelkassette an das Gehäuse 12 werden die elektrischen Kontakte hergestellt.

Der spezielle Aufgau für die Herstellung der elektrischen Kontaktverbindungen - mindestens drei Kontaktanschlüsse, nämlich Masse und die beiden Anschlüsse für linken und rechten Kopf- oder Ohrhörer, gegebenenfalls aber auch vier Anschlüsse, wenn auf den gemeinsamen Massenanschluß verzichtet und beide Zuleitungen zu jedem elektroakustischen Wandler mit gegenphasigen Signalen beaufschlagt werden - kann so getroffen sein, daß an jeder Kassette die entsprechende Anzahl von Kontaktstiften vorspringend angeordnet ist, die dann in entsprechende Kontaktsecköffnungen des Gehäuses 12 des Kleinstereogerätes bzw. eine jeweils vorgeschalteten Kabelkassette eingreifen oder umgekehrt. Es ist aber auch möglich, die vorspringenden Kontakte in das jeweilige Gehäuse (Gehäuse 12 des Kleinstereogeräts oder die Gehäuse 13a, 13b, 13c der jeweiligen Kabelkassette ) zurückziehbar bzw. federnd einziehbar auszubilden, damit bei abgenommener Kassette keine Störungen auftreten. Auf eine andere Art der Herstellung der elektrischen Kontaktverbindungen wird weiter unten noch eingegangen.

Die mechanischen Rast- oder Verriegelungsmittel, die das Anklicken der jeweiligen Kabelkassette 11a, 11b, 11c an das Gehäuse 12 bzw. untereinander ermöglichen, können grundsätzlich von beliebiger, auch bekannter Art sein und über federnde Rastbeinchen, über zurückweichende Randnuten u. dgl. verfügen oder über, um gegenständlich eine der Möglichkeiten aufzuzeigen, vorspringende Zapfen 14 an der Kabelkassette bzw. im Gehäuse 12 des Stereogeräts, die in komplementäre Aufnahmeöffnungen 15 jeweils eingreifen und dort federnde Verriegelungs- oder Sperrorgane, die in der Zeichnung nicht gesondert dargestellt sind, zur Seite schieben und anschließend bei vollständigem Anrasten hintergreifen, so daß sich eine sichere Rastverbindung zwischen den jeweiligen Gehäusen ergibt. Hierzu können die Rastzapfen 14 an ihrem Ende über sich nach außen erweiternde Zungen oder Köpfe verfügen.

Es ist für die Realisierung der mechanischen Verrastung zwischen Kassetten untereinander und am Gehäuse des Stereogeräts auch möglich, die Kassetten über Führungen aufzuschieben, wobei komplementäre Längsführungsschienen vorgesehen sind, so daß mit dem Aufschieben an einer Seite begonnen wird, bis die Kassette allseits bündig an der dann abgedeckten, zugewandten Fläche des Gehäuses des Kleinstereogerätes anliegt. In dieser Endposition können dann auch die elektrischen Verbindungen durch Vorspringen entsprechender Anschlußkontaktstifte in Steckausnehmungen hergestellt werden.

Schließlich besteht eine Ausgestaltung vorliegender Erfindung darin, die elektrischen Kontaktverbindungen und die mechanischen Anrastmittel als eine gemeinsam wirkende Einrichtung auszubilden, beispielsweise indem je nach Anzahl der erforderlichen elektrischen Kontaktverbindungen etwa drei Kontaktzapfen 14 vorgesehen sind, die bei ihrem Einschieben in die Rastpositionen einmal als mechanische Verbindungs- und Rastmittel dienen, andererseits aber gleichzeitig, beispielsweise indem sie aus Messing oder einem sonstigen elektrisch leitenden Metall hergestellt sind, auch die elektrischen Verbindungen herstellen, da sie im Inneren der Rastöffnungen 15 auf ebenfalls elektrisch leitende, vorzugsweise federnde Gegenkontaktmittel treffen.

Bei dem dargestellten Ausführungsbeispiel sind drei verschiedene Arten von Kabelkassetten gezeigt, die mit A, B und C bezeichnet sind.

Bei der Kabelkassette A handelt es sich um die Möglichkeit, eine Verbindung zwischen dem Kleinstereogerät und einem durch einen Kopfbügel 16 verbundenen Kopfhörerpaar 17 herzustellen, welches aufgrund seiner Abmessungen in der kleinen Kabelkassette keinen Platz findet. Das aus der Kabelkassette herausziehbare Kabel 18 ist daher an seinem freien Ende mit einer Steckverbindung 19 ausgerüstet, die in eine entsprechende Aufnahmeöffnung 19' vorzugsweise nur an einer Seite des Kopfhörers 17 eingeführt wird. Hierbei versteht es sich, daß die mindestens erforderlichen drei verschiedenen Kontaktverbindungen hierdurch hergestellt werden. Der beim Nichtgebrauch dann kabellose Kopfhörer 17 kann dann separat verstaut, gegebenenfalls über ein Gelenk, wie für sich gesehen bekannt, zusammengeklappt und auf kleinstem Raum untergebracht werden.

Die Kabelkassettenart B dient der Herstellung einer Verbindung mit einem Ohreinsteckhörerpaar, wobei die jeweiligen elektroakustischen Wandler knopfartig ausgebildet sind, daher auch als Knopfhörer bezeichnet werden können. Auch hier ist ein ebenfalls in seinen Abmessungen sehr kleines Steckerpaar 19a vorgesehen, welches mit seinen Kabelenden links und rechts in entsprechende Gegenkontakte 19a' am Ohreinsteckhörerpaar 20 eingeführt wird. Da ein solches Knopfhörerpaar von den Kabelenden abgezogen werden kann, ergeben sich auch hier keine Probleme mit der am Kabel verbleibenden Kontaktteilverbindung, also beispielsweise dem Stecker 19a, da dieser wegen seiner sehr geringen Abmessungen einfach aus der Kabelkassette herausragen kann, wenn das Kabel durch die Aufwickeleinrichtung in die Kassette eingezogen worden ist.

Die beiden Knopfhörer können dann separat und wegen ihrer Kleinheit praktisch an jeder beliebigen Stelle aufgehoben werden.

Alternativ ist es bei dieser Ausführungsform B möglich, an geeigneter Stelle in der Kabelkassette entsprechende Aufnahmevertiefungen auszubilden, die, unter Umständen mit geringfügig federnden, also zunächst zurückweichenden Wänden, die beiden Knopfhörer aufnehmen, wenn diese in diese Ausnehmung eingedrückt werden. Sie bleiben dann in diesen Ausnehmungen und werden durch einen gewissen elastischen Spanndruck gehalten, bis sie wieder manuell herausgenommen und mit den zugeordneten Steckern verbunden werden. In diesem Fall dient die Kabelkassette gleichzeitig als Aufbewahrungsort für die beiden Knopfhörer.

Schließlich ist es auch möglich, wie bei der Variante C ein Einsteckohrhörerpaar 21 vorzusehen, dieses jedoch mit den Kabelenden 22 fest zu verbinden. In diesem Fall können, wie soeben schon erwähnt, im Rücklaufbereich des Kabels im Kassettengehäuse Vertiefungen oder Ausnehmungen angeordnet werden, die die beiden Knopfhörer dann aufnehmen.

Da eine bevorzugte Variante bei vorliegender Erfindung darin besteht, das Kabel durch Federzug automatisch einzuziehen, so daß es auch in der Endposition durch die Federvorspannung noch gehalten ist, ist bei der letzten Variante C dann noch gleich dafür gesorgt, daß die mit den Kabelenden fest verbundenen beiden Knopfhörer in ihren Vertiefungen im Kassettengehäuse bei Nichtgebrauch verbleiben, da sie durch die auf das Kabel wirkende Federvorspannung gehalten werden.

Durch die Aufrollmechanik, bei welcher das Kabel auf eine in der Kassette gelagerte Spule aufgewickelt wird, ergibt sich im übrigen noch ein weiterer wesentlicher Vorteil, der darin besteht, daß das Verbindungskabel keinen größeren Abknickungen unterworfen wird als durch die Rundung der Aufwickelspule gegeben, d.h. die Gefahr eines Kabelbruchs ist durch die erfindungsgemäße Einrichtung wesentlich geringer, als wenn man ein loses Kabel um zwei oder drei Finger wickelt und dann eng in einer Tasche verstaut.

Jede der Varianten A, B und C einer Kabelkassette (es versteht sich, daß hier auch noch weitere Ausgestaltungen denkbar sind) wird daher mechanisch und elektrisch bzw. mechanisch/elektrisch direkt oder indirekt, nämlich über eine andere Kabelkassette an das Gehäuse eines entsprechend ausgebildeten stereophonen Programmgeräts (Kleinstereogeräts) mit elektrischen Kopfhörerausgangsanschlüssen angeschlossen, und zwar so, daß die Rastmittel sicherstellen, daß dies in einer vorgegebenen Position erfolgt. Auf diese Weise bildet das Programmgerät mit der oder den jeweils angeschlossenen Kabelkassette(n) eine körperliche Einheit.

Eine vorteilhafte Ausgestaltung besteht darin, daß die endseitige Kontaktanordnung des Kabels 18, nachdem dieses vollständig in die Kassette eingezogen worden ist, von einer Vertiefung, trichterförmigen Absenkung o. dgl. aufgenommen wird, so daß sich ein bündiger Abschluß mit der Kassettenoberfläche ergibt. Aus dieser Absenkung kann der Stecker dann problemlos wieder von Hand ausgezogen werden. Gegebenenfalls ist es möglich, eine Auswurfeinrichtung vorzusehen, die beispielsweise als Schieber an der Kassettenoberfläche ausgebildet ist und mit inneren Teilen so auf das eingezogene Kabel oder den Stecker einwirkt, daß dieser aus seiner ihn aufnehmenden Vertiefung im Kassettengehäuse herausgeschoben wird, so daß der Benutzer eines solchen Geräts den Stecker dann mit der Hand greifen und das Kabel weiter ausziehen kann.

Da die Spule im Inneren des Geräts drehbar gelagert ist und über eine vorzugsweise über eine Vielzahl von Windungen verfügende Feder auch in die Aufwickelendposition vorgespannt ist, müssen Mittel vorgesehen sein, um den anderen, stets im Kasseteninneren verbleibenden Kabelanschluß mit den elektrischen Anschlußkontakten zu verbinden, die beim Anrasten der Kabelkassette die elektrischen Verbindungen nach außen herstellen. Dies kann in für sich gesehen bekannter Weise durch Schleifkontakte geschehen, die so ausgebildet sind, daß stets für einen Kontakt sorgende Bürsten (Kohlebürsten) auf entsprechenden Gleitringen am Spulenkörper gleiten. Es ist aber auch möglich, ein inneres längeres Kabelende einfach aus dem Spuleninneren herauszuführen und im Kasseteninneren an den elektrischen Anschlußverbindungen zu befestigen - man nimmt dann aber in Kauf, daß beim Ausziehen des Verbindungskabels durch die Drehbewegung der das Kabel abwickelnden Spule dieses Kabelende verdrillt wird. Dies ist unter Umständen von untergeordneter Bedeutung, so daß man auf Schleifkontakte auch verzichten kann.

Eine weitere bevorzugte Ausgestaltung besteht darin, daß die nach außen zu führenden elektrischen Anschlußkontakte nicht am Kassettengehäuse, sondern an der Spule angeordnet sind und sich daher mit dieser drehen. In diesem Fall befindet sich dann im Kassettengehäuse eine Öffnung, die so ausgerichtet ist, daß bei einer bestimmten Verdrehpostion der Spule jeweils die an der Spule befestigten Steckkontakte oder Aufnahmebuchsen o. dgl. mit dieser Öffnung fluchten, so daß in dieser Winkelposition (und bei jeweils entsprechend ausgezogenem oder freigegebenem Kabel) das Anrasten jeweils erfolgen kann, entweder an das Gehäuse 12 des Programmgeräts oder das Gehäuse einer weiteren Kassette. Hierbei kann es sich auch als vorteilhaft erweisen, daß in dieser jeweils fluchtenden Verdrehposition die Spule eine Arretiermöglichkeit oder eine gewisse Schwergängigkeit aufweist, in der sie also eine Vorzugswinkelposition leicht einnimmt, so daß auch das Anrasten problemlos erfolgen kann. In diesem Fall ist sichergestellt, daß sich sowohl eine einwandfreie Kontaktverbindung zum Programmgerät oder zu den anderen Kassetten bei vollkommener Kabelschonung ergibt.

Der auf die Wickelspule für das Kabel einwirkende automatische Aufwickelmechanismus umfaßt bevorzugt eine Feder, die so vorgespannt ist, daß sie auch bei maximal ausgezogener Länge des Kabels dieses vollständig in die Kassette bei Freigabe zurückholt.

Da es unpraktisch ist, auf das Kabel einen ständigen Federdruck einwirken zu lassen, sind Feststellanordnungen vorgesehen, die auf die Feder und/oder die Spule von außen einwirken können, beispielsweise ein kleines Schiebehebelchen, welches vom Äußeren der Kassette bedienbar ist und mit einem inneren Vorsprung in einer Randzahnung eines Spulenflansches eingreift, so daß man in jeder beliebigen ausgezogenen oder teilausgezogenen Position des Kabels den auf die Spule einwirkenden Federzug kompensieren kann und das Kabel dann frei ausgezogen fixiert bleibt.

Bei Zurückziehen des Hebelchens wird die Federspannung auf die Wickelspule wieder freigegeben und das Kabel wird sauber mit gleichmäßigem Zug aufgewickelt.

Hier sind auch andere automatische Wickelmechanismen denkbar, beispielsweise solche, die, wie für sich gesehen etwa bei Fensterrollos u. dgl. bekannt, selbsttätig bei bestimmten ausgezogenen Kabellängen arretieren, indem man entsprechend am Kabel ruckt oder die Kabelkassette in eine vorgegebene geometrische Position bringt, so daß ein Arretierklötzchen oder Bremsstift einfallen kann. Die Lösung dieser automatischen Arretierung erfolgt durhc erneuten Zug am Kabel. Hierzu sind weitere Ausführungen nicht erforderlich, da, wie erwähnt, solche Mechanismen bekannt sind.

Anstelle eines kleinen Schiebehebelchens, der randseitig in einen Spulenflanschzahnung eingreift, kann der automatische Kabeleinzug auch durch Knopfdruck arretierbar bzw. lösbar sein; es versteht sich ferner, daß die elektrischen Kontaktverbindungen, also Stecker bzw. Aufnahmebuchsen in beliebiger Weise ausgebildet und in komplementärer Zuordnung am Gehäuse des Programm geräts oder der jeweiligen Kassette angeordnet sein können.

Der Darstellung der Fig. 2 läßt sich entnehmen, daß die Kabelkassette bevorzugt an einer Schmalseite des Gehäuses 12' des Programmgeräts befestigt wird, wobei in diesem Fall zwei Varianten A' und B' von an das Gehäuse 12' angerasteten Kabelkassetten dargestellt sind. Bei einer der Kabelkassetten ist das Kabel 18' mit daran angeordnetem Kopfhörer 17' ausgezogen.

Die automatische Aufwickelanordnung 23 im Inneren des Kassettengehäuses kann in vielfacher Weise ausgebildet sein; so kann eine einzelne Spule 24 vorgesehen sein, auf deren Spulenkörper, vorzugsweise mit beidseitigen Flanschen das Verbindungskabel aufgewickelt wird, es ist aber auch möglich, zwei im Abstand zueinander angeordnete Wickelkörper 25a, 25b vorzusehen, was der eine deutliche Längserstreckung aufweisenden Kabelkassette besser gerecht wird, über die dann das Kabel, beide Wickelkörper wie einen Keilriemen umlaufend, in entsprechend vielen Windungen geschlungen ist. Ein Abziehen des Kabels ist bei einem entsprechenden leichten Gang der Wickelkörper problemlos möglich; gegebenenfalls kann man, vorzugsweise über die sich drehenden Achsen der Wickelkörper zwischen diesen eine mechanische, etwa durch Zwischenzahnräder gebildete Drehverbindung herstellen, so daß sich ein einwandfreier Gleichlauf ergibt.

Alle in der Beschreibung, den nachfolgenden Ansprüchen und der Zeichnung dargestellten Merkmale können sowohl einzeln als auch in beliebiger Kombination miteinander erfindungswesentlich sein.

## Ansprüche

1. Vorrichtung zur Lagerung eines elektrischen Verbindungskabels, welches zwischen ein tragbares, batteriebetriebenes Programmgerät (Kleinstereogerät, Kassettenspieler und/oder Rundfunkempfänger) und an dieses angeschlossene Kopf- oder Ohrhörer geschaltet ist, dadurch gekennzeichnet, daß eine separate, das Verbindungskabel (18, 18') mittels einer Aufwickelanordnung (23) mindestens teilweise aufnehmende Kassette (11a, 11b, 11c) mit eigenem, abgeschlossenem Gehäuse (13a, 13b, 13c) vorgesehen ist und daß die Kassette (11a, 11b, 11c) über mechanische Verriegelungsmittel und elektrische Kontaktmittel oder eine Kombination aus beiden verfügt, zur lösbaren Befestigung an das Gehäuse des Programmgeräts (10) und Herstellung der erforderlichen elektrischen Kontaktverbindungen.

2. Vorrichtung nach Anspruch 1, dadurch gekennzeichnet, daß sich an den Gehäusen (12) von Programmgerät bzw. den mit diesem und untereinander zu verbindenden Kassetten (11a, 11b, 11c) jeweils wechselseitig in Wirkverbindung tretende Rastmittel (14, 15) befinden, die aus Rastvorsprüngen und Rastausnehmungen bestehen.

3. Vorrichtung nach Anspruch 1 oder 2, dadurch gekennzeichnet, daß die elektrischen Kontaktmittel zwischen dem Programmgerät und den an diesen zu befestigenden Kabelkassetten (11a, 11b, 11c) bzw. an den Kabelkassetten untereinander wechselseitig aus Stecker und Aufnahmebuchsen bestehen.

4. Vorrichtung nach einem der Ansprüche 1-3, dadurch gekennzeichnet, daß über die Gehäuseabmessungen hervorstehende Teile (Stecker, Zapfen) der mechanischen und/oder elektrischen Anrast- oder Kontaktmittel versenkbar ausgebildet sind.

5. Vorrichtung nach einem der Ansprüche 1-4, dadurch gekennzeichnet, daß die mechanischen Anrast-und die elektrischen Kontaktmittel jeweils von einem beide Funktionen gleichzeitig erfüllenden gemeinsamen Teil gebildet sind.

6. Vorrichtung nach einem der Ansprüche 1-5, dadurch gekennzeichnet, daß die das Verbindungskabel aufnehmenden Kassetten (11a, 11b, 11c) in Form von Mehrfachanrastungen sowohl mit dem Programmgerät als auch untereinander mechanisch und/oder elektrisch verbindbar sind.

7. Vorrichtung nach einem der Ansprüche 1-6, dadurch gekennzeichnet, daß die Aufwickelanordnung (23) im Kasseteninneren aus mindestens einer Spule (24) besteht.

8. Vorrichtung nach einem der Ansprüche 1-6, dadurch gekennzeichnet, daß die Aufwickelanordnung (23) aus zwei im Inneren der Kassette drehbar und im Abstand zueinander gelagerten Wickelkörpern (25a, 25b) besteht, die von dem Kabel umschlungen sind.

9. Vorrichtung nach Anspruch 7 oder 8, dadurch gekennzeichnet, daß die Aufwickelanordnung zur Erzielung eines automatischen Kabeleinzugs federvorgespannt ist oder einen motorischen Antrieb aufweist.

10. Vorrichtung nach Anspruch 9, dadurch gekennzeichnet, daß zur Erzielung der Federvorspannung eine Spiralfeder von solcher Länge und mit so vielen Windungen vorgesehen ist, daß das Kabel bei vollem Einzug unter Federrestvorspannung gehalten ist.

11. Vorrichtung nach einem der Ansprüche 1-10, dadurch gekennzeichnet, daß eine beliebige Auszugsposition des Verbindungskabels durch mechanische Arretierung der Aufwickelanordnung feststellbar ist.

12. Vorrichtung nach Anspruch 11, dadurch gekennzeichnet, daß zur Arretierung der Aufwickelanordnung ein von außen betätigbares Schiebeglied oder Druckknopf vorgesehen ist, der mechanisch die Drehbewegung der einen federvorgespannten Spule (24) bzw. der beiden Wickelkörper (25a, 25b) der Aufwickelanordnung (23) sperrt.

13. Vorrichtung nach Anspruch 11, dadurch gekennzeichnet, daß eine automatische Arretierung für die Aufwickelanordnung vorgesehen ist mit einem durch erneuten Zug am Kabel wieder lösbaren Sperrglied.

14. Vorrichtung nach einem der Ansprüche 1-13, dadurch gekennzeichnet, daß das freie Kabelende der Kassette mit Kontaktmitteln (Kontaktstecker 19) zur Verbindung mit einem Kopfhörer (17) von vorzugsweise leichter, offener und supraauraler Form ausgestattet ist.

15. Vorrichtung nach einem der Ansprüche 1-13, dadurch gekennzeichnet, daß das freie Kabelende zwei getrennte Kontaktmittel (19a) aufweist zur Verbindung jeweils mit einem Ohreinsteckhörer (Knopfhörer 19a).

16. Vorrichtung nach einem der Ansprüche 1-13, dadurch gekennzeichnet, daß das in zwei Leitungen mündende freie Kabelende fest mit zwei Ohreinsteckhörern (21) verbunden ist.

17. Vorrichtung nach einem der Ansprüche 14-16, dadurch gekennzeichnet, daß zur Aufnahme der am freien Kabelende befestigten Kontaktanordnung (Stecker) bzw. der mit dem freien Kabelende verbundenen Ohreinsteckhörer (21) im Gehäuse Vertiefungen oder Aufnahmetaschen vorgesehen sind, in denen Stecker oder Ohreinsteckhörer durch den ständig auf das Kabelende einwirkenden Federzug gehalten sind.

18. Vorrichtung nach Anspruch 16, dadurch gekennzeichnet, daß die vom Kabel abnehmbaren Ohreinsteckhörer (19a) in eigene äußere Aufnahmetaschen des Gehäuses (13b) der Kabelkassette einlegbar, vorzugsweise verrastbar sind.

19. Vorrichtung nach einem der Ansprüche 1-18, dadurch gekennzeichnet, daß zum automatischen Kabeleinzug im Kassettengehäuse ein auf die eine Wickelspule (24) oder mindestens einen der Wickelkörper (25a, 25b) einwirkender Elektromotor vorgesehen ist, dessen elektrischer Antrieb über Steckkontakte vom batterieversorgten Hauptgerät stammt.

20. Vorrichtung nach einem oder mehreren der Ansprüche 1-19, dadurch gekennzeichnet, daß die kasetteninneren Kabelenden über Schleifkontakte (Bürsten und Schleifringe) mit den elektrischen Kassettenanschlußkontakten verbunden sind.

21. Vorrichtung nach einem der Ansprüche 1-20, dadurch gekennzeichnet, daß die kasetteninternen Kabelanschlüsse an sich mit der Aufwickelanordnung drehenden Kontakten befestigt sind, die bei bestimmten Winkelpositionen der Wickelspule (24) oder der Wickelkörper (25a, 25b) durch ein Fenster im Kassettengehäuse von außen zugänglich sind und daß in dieser Winkelposition die elektrische Kontaktverbindung mit dem an das Gehäuse des Programmgeräts oder untereinander angerasteten Kabelkassetten erfolgt.

# Fig.1

# Fig.2